# EUROPEAN PATENT SPECIFICATION

(11) **EP 4 439 846 B1**
(45) Date of publication and mention of the grant of the patent: **09.12.2026**
(21) Application number: 24159250.0
(22) Date of filing: 22.02.2024
(51) Int. Cl.: H01M 50/503, H01M 50/507

(54) **BATTERY PACK**
BATTERIEPACK
BLOC-BATTERIE

(30) Priority: 26.03.2023 KR 20230039359; 03.04.2023 KR 20230043709
(43) Date of publication of application: 02.10.2024
(73) Proprietor: Samsung SDI Co., Ltd., Yongin-si, Gyeonggi-do 17084 (KR)
(72) Inventor: KIM, Myungchul, 17084 Yongin-si (KR)
(74) Representative: Marks & Clerk LLP

(56) References cited:
- US-A1- 2017 125 753
- US-A1- 2022 021 060

## Description

### BACKGROUND

### 1. Field

Aspects of one or more embodiments relate to a battery pack.

### 2. Description of the Related Art

A secondary battery refers to a battery that is configured to be repeatedly charged and discharged, as opposed to a primary battery that is generally not capable of being repeatedly charged and discharged. Secondary batteries may be used as energy sources for mobile devices, electric vehicles, hybrid vehicles, electric bicycles, uninterruptible power supplies, etc., in the form of a single battery or in the form of a pack in which multiple battery cells are connected and grouped into one unit, according to a type of an applied external device.

The battery pack includes a housing, a plurality of battery cells located therein, and a bus bar electrically connecting the plurality of battery cells. The bus bar is located on and/or under the battery pack to connect the same electrodes of the plurality of battery cells to one another. The bus bar includes a plurality of openings through which electrodes of the battery cells are exposed, and connecting portions contacting the electrodes may be respectively located in the openings. The connecting portions may be connected to the electrodes of the battery cells through welding.

However, in a process of welding the bus bar and the electrodes, a spatter may be generated. When a laser is irradiated to a material, the temperature of the material rises such that the material melts and molten metal is formed. Metal vapor generated in this process moves the molten metal, some of which is scattered outside a welding region, which is referred to as a spatter. The spatter may degrade the quality of the battery pack by attaching to various parts of the battery pack as well as the welding region between the bus bar and the electrode. To prevent or reduce this phenomenon, the spatter may be blown away using high-pressure air or sucked using negative pressure, but some spatter may remain in the battery pack. For example, when the remaining spatter moves down the bus bar and leaks between the battery cell and an insulating plate, a short-circuit, a withstand voltage, or an insulation failure may occur.

The above information disclosed in this Background section is only for enhancement of understanding of the background and therefore the information discussed in this Background section does not necessarily constitute prior art.
US 2017/125753 A1 relates to a rechargeable battery module.

### SUMMARY

Aspects of one or more embodiments include a battery pack with a relatively improved quality by preventing or reducing instances of a spatter generated in welding between a bus bar and a battery cell being introduced into the battery pack.

Additional aspects will be set forth in part in the description which follows and, in part, will be apparent from the description, or may be learned by practice of the presented embodiments of the disclosure.

According to one or more embodiments, a battery pack includes a plurality of battery cells including one or more electrodes, one or more bus bars including one or more connecting portions connected to the one or more electrodes, a pair of side plates at opposite sides of the plurality of battery cells, and a bus bar holder including an opening corresponding to each of the electrodes, a support including a support groove into which the side plate is inserted, and a receiving portion including a receiving groove extending from the support and communicating with the opening.

According to some embodiments, the support and the receiving portion may be between the bus bar and the side plate and extend in a longitudinal direction of the side plate.

According to some embodiments, the side plate may include a bent portion extending inwardly, and the bent portion may be inserted into the support groove.

According to some embodiments, the support may include a first support end and a second support end formed to oppose each other with the side plate therebetween and a first barrier defining the support groove by connecting the first support end to the second support end and between the bus bar and the side plate.

According to some embodiments, the first support end may be above the bus bar, the second support end may be under the bus bar, and the first barrier may extend between the first support end and the second support end in a height direction.

According to some embodiments, the first barrier may be spaced apart from the bus bar outwardly from the battery pack.

According to some embodiments, the receiving portion may include a second barrier extending down from the support, a first receiving end spaced apart from the second barrier to form the receiving groove therebetween, and a second receiving end connecting the second barrier to the first receiving end.

According to some embodiments, the second barrier may be between the battery cell and the side plate and extend in a longitudinal direction of the side plate.

According to some embodiments, the second barrier may be spaced apart from a shoulder portion of the electrode in a height direction.

According to some embodiments, a spacing distance between the second barrier and the connecting portion of the bus bar may be less than a spacing distance between the second barrier and the first receiving end.

According to some embodiments, the second barrier may be under the bus bar at a same level as the electrode.

According to some embodiments, the receiving groove may have a downwardly concave shape to communicate with the opening.

According to some embodiments, the first receiving end may be spaced apart from the electrode and extend perpendicularly to the second receiving end to contact a lower end of the connecting portion.

According to some embodiments, the first receiving end may be spaced apart from the electrode and extends perpendicularly to the second receiving end to be spaced apart from a lower end of the connecting portion, and a spacing distance between the first receiving end and the connecting portion may be less than a width of the receiving groove.

According to some embodiments, the first receiving end may contact the electrode and extend in parallel to the second receiving end.

According to some embodiments, the first receiving end may extend perpendicularly to an end of the second receiving end and a surface thereof may contact the electrode over an entire height direction.

According to some embodiments, the connecting portion may cover a gap between the electrode and the receiving portion.

According to some embodiments, the connecting portion may be on a top surface of the electrode, and an end portion thereof may protrude from a side surface of the electrode to cover at least a part of the receiving groove.

According to some embodiments, the connecting portion may be on a top surface of the electrode and an end portion thereof may be on a same vertical line as a side surface of the electrode.

According to some embodiments, the support and the receiving portion may be continuously formed over an entire longitudinal direction of the side plate.

At least some of the above and other features of the invention are set out in the claims.

Other aspects, features, and characteristics than those described above will become more apparent from the detailed description, claims, and drawings for carrying out embodiments according to the present disclosure as described in more detail below.

### BRIEF DESCRIPTION OF THE DRAWINGS

The above and other aspects, features, and characteristics of certain embodiments of the disclosure will be more apparent from the following description taken in conjunction with the accompanying drawings, in which:
FIG. 1 is an exploded perspective view of a battery pack according to some embodiments;
FIG. 2 shows a state where a battery pack is assembled according to some embodiments;
FIGS. 3 and 4 show a bus bar and a bus bar holder according to some embodiments;
FIG. 5 shows a cross-section of a battery pack taken along a line V - V' of FIG. 2 according to some embodiments;
FIG. 6 shows an enlarged view of FIG. 5 according to some embodiments;
FIG. 7 shows a cross-section of a battery pack according to some embodiments;
FIG. 8 shows an enlarged view of FIG. 7 according to some embodiments;
FIG. 9 shows a cross-section of a battery pack according to some embodiments;
FIG. 10 shows an enlarged view of FIG. 9 according to some embodiments;
FIG. 11 shows a cross-section of a battery pack according to some embodiments;
FIG. 12 shows an enlarged view of FIG. 11 according to some embodiments; and
FIG. 13 shows a cross-section of a battery pack according to related art.

### DETAILED DESCRIPTION

Reference will now be made in more detail to aspects of some embodiments, which are illustrated in the accompanying drawings, wherein like reference numerals refer to like components throughout. In this regard, embodiments according to the present disclosure may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of components, modify the entire list of components and do not modify the individual components of the list.

"Or" described herein includes "A" and/or "B" as well as "A or B" unless explicitly stated otherwise.

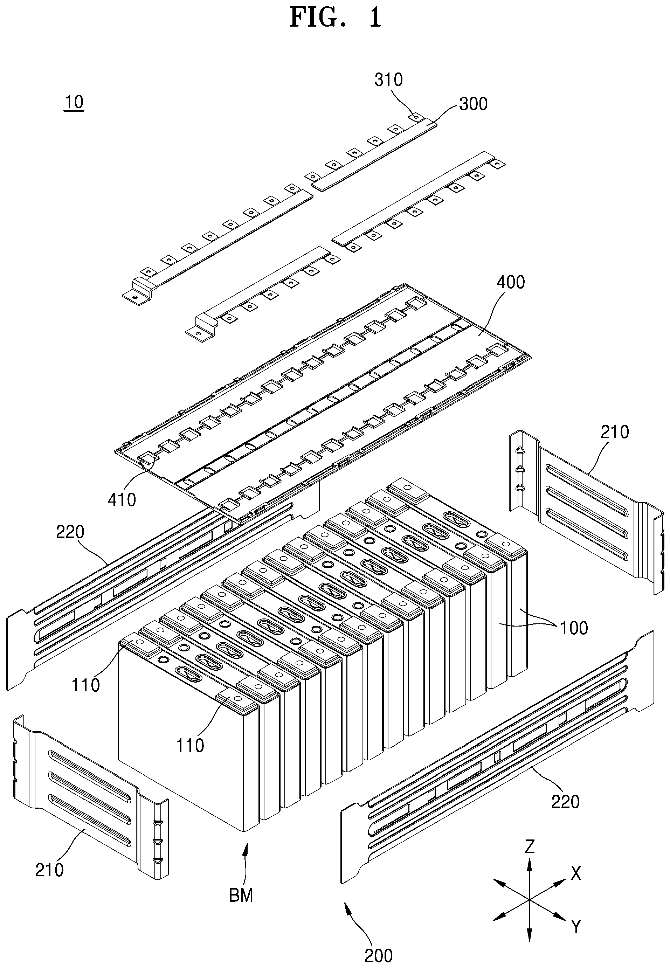

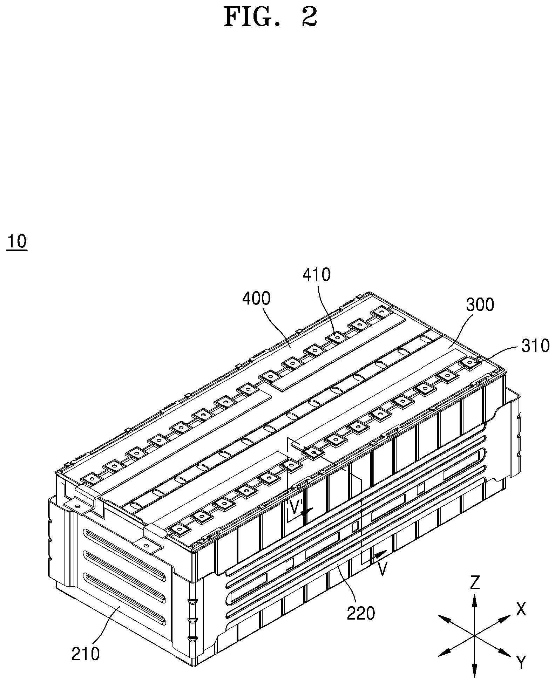

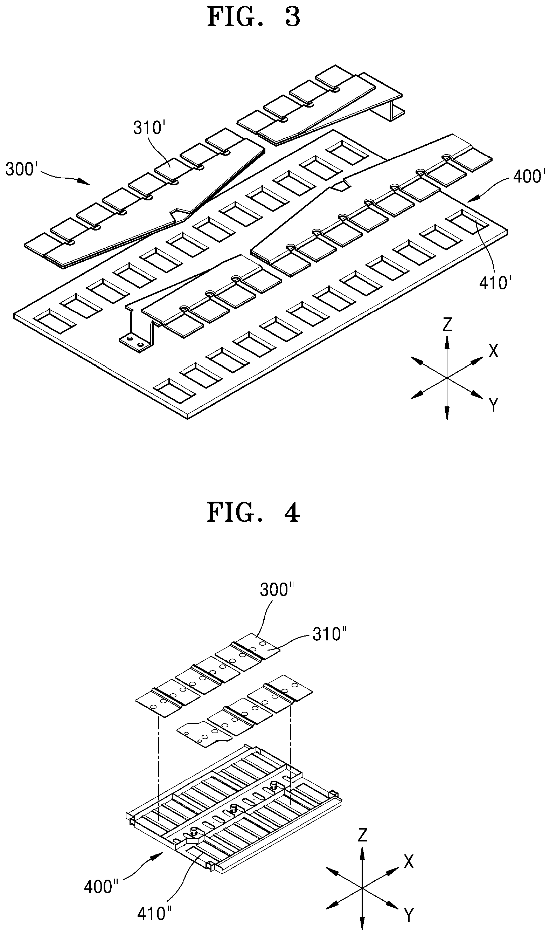

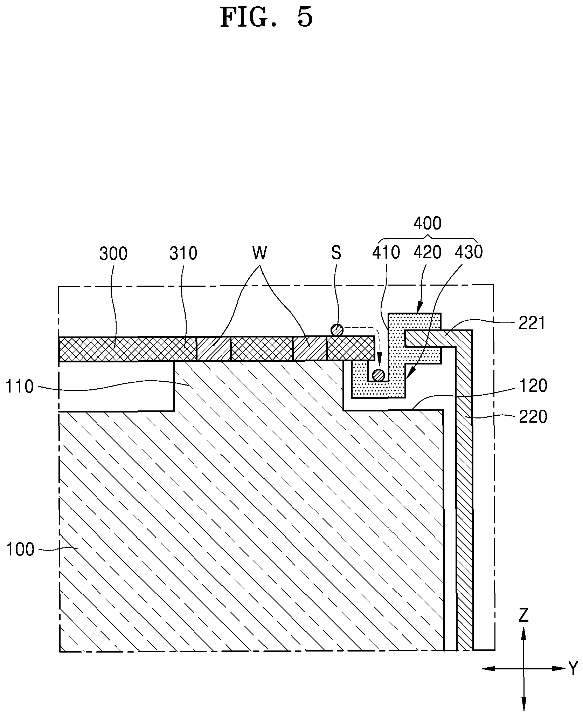

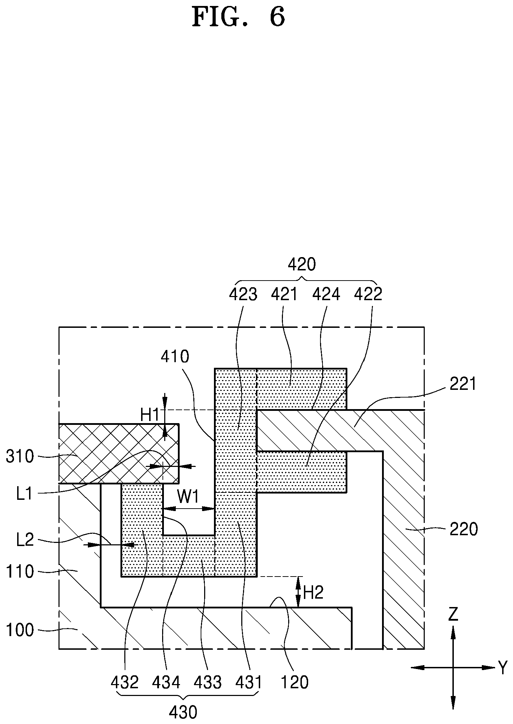

FIG. 1 is an exploded perspective view of a battery pack 10 according to some embodiments, FIG. 2 shows a state where the battery pack 10 is assembled according to some embodiments, FIGS. 3 and 4 show bus bars 300' and 300" and bus bar holders 400' and 400" according to some embodiments, FIG. 5 shows a cross-section of the battery pack 10 taken along a line V - V' of FIG. 2, and FIG. 6 shows an enlarged view of FIG. 5 according to some embodiments.

Referring to FIGS. 1 to 6, the battery pack 10 according to some embodiments may include a battery module BM configured in which a plurality of battery cells 100 are electrically connected to each other. While the battery cell 100 is shown in the shape of a plate in the drawings, the shape thereof is not specially limited. For example, the battery cell 100 may have various shapes such as a pouch shape, a cylindrical shape, etc. The battery module BM is shown in FIG. 1 as including 14 battery cells 100, but the number of battery cells 100 may be appropriately selected according to a capacity of the battery pack 10.

The battery cell 100 may include one or more electrodes 110 in an end portion thereof. As shown in FIG. 1, a pair of electrodes 110 may be spaced apart from each other on a top end of the battery cell 100. The electrodes 110 may be respectively located on the top end and a bottom end of the battery cell 100. The electrodes 110 may be exposed to outside through an opening 410 of a bus bar holder 400.

For example, as shown in FIG. 5, the bus bar holder 400 may be placed on the plurality of battery cells 100 and the electrode 110 may be exposed to outside through the opening 410. In this case, a bus bar 300 may be placed on the bus bar holder 400, and a connecting portion 310 may be connected to the electrode 110 through the opening 410 using welding, etc. According to some embodiments, the connecting portion 310 and the electrode 110 may be connected by laser welding, and one or more welding portions W may be formed in the connecting portion 310.

A case 200 may hold and support the battery module BM therein and include end plates 210 and side plates 220.

The end plates 210 may be located at opposite ends of the plurality of battery cells 100. As shown in FIGS. 1 and 2, a pair of end plates 210 may be arranged in a longitudinal direction of the battery pack 10 (an X-axis direction) to protect the plurality of battery cells 100 located therein.

The side plates 220 may be located at opposite sides of the plurality of battery cells 100. As shown in FIGS. 1 and 2, a pair of side plates 220 may be located in a width direction of the battery pack 10 (a Y-axis direction) to protect the plurality of battery cells 100 located therein. The side plate 220 may include an insulator on an inner surface facing the battery cell 100, or at least a part of the inner surface may be formed of an insulating material.

The bus bar 300 may be located at a side of the battery module BM to connect the plurality of battery cells 100 to each other. For example, as shown in FIGS. 1 and 2, the battery pack 10 may include one or more bus bars 300 having a shape extending in the longitudinal direction of the battery pack 10 (the X-axis direction).

Each bus bar 300 may include a plurality of connecting portions 310. Each connecting portion 310 may be connected to the electrode 110 of a different battery cell 100 to electrically connect the plurality of battery cells 100 to each other. The connecting portion 310 may extend in a direction from the bus bar 300 to contact the electrode 110 exposed through the opening 410 of the bus bar holder 400. The connecting portion 310 may be fixed to the electrode 110 of the battery cell 100. For example, the connecting portion 310 may be fixed to the electrode 110 through laser welding, etc.

According to some embodiments, the connecting portion 310 may have a longer length than that of the electrode 110 in a direction. As shown in FIGS. 5 and 6, the connecting portion 310 may further protrude from an end portion of the electrode 110 in the width direction (the Y-axis direction). Thus, the electrode 110 may be connected to the connecting portion 310 with a top surface thereof being completely covered with the connecting portion 310, such that the battery cell 100 and the bus bar 300 may be connected well to each other. As shown in FIG. 6, a part of the connecting portion 310 protruding from the end portion of the electrode 110 may cover a gap between the electrode 110 and a receiving portion 430 of the bus bar holder 400 to prevent or reduce instances of a spatter S and a foreign substance or contaminant being introduced into the battery cell 100.

According to some embodiments, a part of the connecting portion 310 may protrude toward the receiving portion 430 described below. As shown in FIG. 6, an end portion of the connecting portion 310 in a direction (the Y-axis direction) may protrude from an end portion of a first receiving end 432 by a length L1 toward the side plate 220 to cover a part of a receiving groove 434. For example, when an excessive lot of spatters S are introduced into the receiving groove 434, deformation and damage may occur in the bus bar holder 400 when the battery pack 10 is used for a long time. Thus, in a state where minimum spatters S are allowed to be introduced into the receiving groove 434 by a protruding part of the connecting portion 310 and the other spatters S are not introduced into the battery cell 100 by the bus bar holder 400, the spatters S may be relatively easily removed through a blowing device, a suction device, etc.

The bus bar holder 400 may be located at a side of the battery pack 10 to support the bus bar 300. For example, as shown in FIGS. 1 and 2, the bus bar holder 400, which is a member in the shape of a flat plate, may be located on a top surface of the battery pack 10 and include a plurality of openings 410 to expose the electrodes 110 of the plurality of battery cells 100. As many openings 410 as the electrodes 110 of the battery cell 100 may be provided at positions corresponding to the electrodes 110. In a state where the electrode 110 is exposed through the opening 410, the bus bar 300 may be placed on the bus bar holder 400 and the connecting portion 310 of the bus bar 300 may be connected to the electrode 110.

According to some embodiments, the bus bar holder 400 may include the opening 410, a support 420, and the receiving portion 430.

As shown in FIGS. 1 and 2, the plurality of openings 410 may be formed in a top surface of the bus bar holder 400. As many openings 410 as the plurality of electrodes 110 may be located at positions corresponding to the plurality of electrodes 110. A shape and size of the opening 410 are not specially limited, and may be properly selected according to shapes and sizes of the electrode 110 and the connecting portion 310. For example, the opening 410 may have a polygonal shape such as a rectangular shape, a circular shape, or an oval shape.

The support 420 may be located at a side of the bus bar holder 400 to support the bus bar holder 400 in the battery pack 10. For example, the support 420 may be located adjacent to the opening 410 and support the bus bar holder 400 on the side plate 220. As shown in FIG. 5, a bent portion 221 of the side plate 220 may be inserted into the support 420 such that the bus bar holder 400 may be supported on the side plate 220. The opening 410 may be defined inside the support 420. The support 420 may be located between the electrode 110 and the side plate 220 and prevent or reduce instances of the spatter S generated in the welding process being introduced to the battery cell 100, together with the receiving groove 430.

According to some embodiments, the support 420 may be formed at a side adjacent to the side plate 220. For example, as shown in FIGS. 2 and 5, the pair of side plates 220 may be located at both sides of the bus bar holder 400 in a direction (the Y-axis direction). The support 420 may be formed between the opening 410 and the side plate 220 in adjacent to the side plate 220. The support 420 may extend in the longitudinal direction of the battery pack 10 (a longitudinal direction of the side plate 220). For example, the support 420 may be continuously arranged in the longitudinal direction of the battery pack 10 (the longitudinal direction of the side plate 220) to correspond to the plurality of openings 410 located in a line in a direction.

According to some embodiments, the support 420 may be arranged not to overlap the bus bar 300. For example, the support 420 may be located at a side of the bus bar holder 400 to oppose a main body of the bus bar 300 with respect to the opening 410.

According to some embodiments, the support 420 may be spaced apart from the connecting portion 310. As shown in FIG. 6, the support 420 may be spaced apart from the end portion of the connecting portion 310 with the opening 410 therebetween, through which the spatter S may be introduced downward. A gap between the support 420 and the connecting portion 310 may be connected to the receiving groove 434 described in more detail below.

According to some embodiments, the support 420 may include a first support end 421, a second support end 422, and a first barrier 423.

The first support end 421 may be located at a side of the side plate 220 to support the bus bar holder 400 on the side plate 220. For example, the first support end 421 may be located on an upper portion of the side plate 220, and according to some embodiments, on a top surface of the bent portion 221 of the side plate 220. The first support end 421 may define the support groove 424 therein together with the second support end 422 and the first barrier 423, and the bent portion 221 may be inserted into the support groove 424. Thus, the bus bar holder 400 may be supported on the side plate 220.

According to some embodiments, the first support end 421 may be located above the bus bar 300. As shown in FIG. 6, the first support end 421 may be located at height H1 from a top surface of the connecting portion 310.

The second support end 422 may be located at the other side of the side plate 220 to support the bus bar holder 400 on the side plate 220. For example, the second support end 422 may be located on a lower portion of the side plate 220, and according to some embodiments, on a bottom surface of the bent portion 221 of the side plate 220. According to some embodiments, the first support end 421, the second support end 422, and the first barrier 423 may have a "⊏" shape or a square shape with one side missing.

According to some embodiments, the second support end 422 may be located under the bus bar 300. As shown in FIG. 6, a lower end of the second support end 422 may be located under the bus bar 300, and according to some embodiments, under a lower end of the connecting portion 310.

The first barrier 423 may be located between the first support end 421 and the second support end 422. For example, as shown in FIG. 6, an upper end of the first barrier 423 may be connected to an end of the first support end 421, and a lower end of the first barrier 423 may be connected to an end of the second support end 422. The first barrier 423 may extend straight in a height direction (a Z-axis direction).

According to some embodiments, the first barrier 423 may be located between the side plate 220 and the bus bar 300 to prevent or reduce instances of the spatter S introduced between the side plate 220 and the bus bar 300 being introduced into the battery cell 100. For example, as shown in FIG. 6, the first barrier 423 may be arranged such that a side thereof contacts an end of the bent portion 221 of the side plate 220 and the other side thereof is oriented toward the opening 410.

According to some embodiments, the first barrier 423 may be spaced apart from the bus bar 300 outwardly from the battery pack 10. As shown in FIG. 6, the opening 410 may be defined between the inner surface of the first barrier 423 and the end of the connecting portion 310 which are spaced apart from each other. The spatter S generated in the welding process may be introduced to the receiving groove 430 through the opening 410.

The support 420 may further include a support groove 424 defined by the first support end 421, the second support end 422, and the first barrier 423. As shown in FIG. 6, the bent portion 221 of the side plate 220 may be inserted into the support groove 424. A depth of the support groove 424 may be less than a protruding length of the bent portion 221. A height of the support groove 424 may be the same as a thickness of the bent portion 221.

The receiving portion 430 may extend from the support 420 and directly receive the spatter S. For example, as shown in FIG. 6, the receiving portion 430 may extend down from the support 420 and include the receiving groove 434 communicating with the opening 410. The spatter S generated in the process of welding the bus bar 300 and the battery cell 100 may move to the receiving groove 434 through the opening 410. The receiving portion 430 may extend in the longitudinal direction of the battery pack 10. For example, the receiving portion 430 may be arranged over the entire longitudinal direction of the battery pack 10 to correspond to the plurality of openings 410 arranged in a line in a direction.

According to some embodiments, the receiving portion 430 may be located between the bus bar 300 and the side plate 220. The receiving portion 430 may also extend continuously in a longitudinal direction of the side plate 220 (the X-axis direction).

According to some embodiments, the receiving portion 430 may include a second barrier 431, the first receiving end 432, a second receiving end 433, and the receiving groove 434.

The second barrier 431 may extend down from the support 420 and may be located between the side plate 220 and the bus bar 300. For example, the second barrier 431 may extend straight down from the lower end of the first barrier 423 and may be located between the connecting portion 310 and the side plate 220. The second barrier 431 may prevent or reduce instances of the spatter S introduced between the side plate 220 and the bus bar 300, together with the first barrier 423, being introduced to the battery cell 100. According to some embodiments, the second barrier 431 together with the first receiving end 432 and the second receiving end 433 may define the receiving groove 434.

According to some embodiments, the second barrier 431 may be located under the bus bar 300 at the same level as the electrode 110. The "same level" may mean that a center is included in a height of another member in a height direction. For example, as shown in FIG. 6, the second barrier 431 may be located under the connecting portion 310, and the electrode 110 and the second barrier 431 may be arranged such that each of their centers is included in each other's height.

The first receiving end 432 may be arranged parallel to the second barrier 431 and spaced apart from the second barrier 431 by a space W1. W1 may correspond to a width of the receiving groove 434. An upper end of the first receiving end 432 may contact a lower end of the connecting portion 310 to support the connecting portion 310 such that the connecting portion 310 is not bent down.

According to some embodiments, the first receiving end 432 may be spaced apart from the battery cell 100. For example, as shown in FIG. 6, the first receiving end 432 may be spaced apart from the electrode 110 by L2 in a direction (the Y-axis direction).

The second receiving end 433 may connect the second barrier 431 to the first receiving end 432 and define the receiving groove 434 together with the second barrier 431 and the first receiving end 432. As shown in FIG. 6, opposite ends of the second receiving end 433 may be respectively connected to a lower end of the second barrier 431 and a lower end of the first receiving end 432, and form a bottom surface of the receiving groove 434.

The receiving groove 434 may be defined by the second barrier 431, the first receiving end 432, and the second receiving end 433 and receive the spatter S generated in the welding process. As shown in FIG. 6, the receiving groove 434 may be formed inside the receiving portion 430 having a shape of U and may be open upward to communicate with the opening 410. The receiving groove 434 may have the width W1 in a direction (the Y-axis direction).

According to some embodiments, at least a part of the receiving groove 434 may be covered with the bus bar 300. For example, as shown in FIG. 6, the connecting portion 310 of the bus bar 300 may protrude toward the receiving groove 434 by the length L1 more than the first receiving end 432, and a part of a top surface of the receiving groove 434 may be covered with the protruding connecting portion 310.

According to some embodiments, the receiving portion 430 may be spaced apart from the battery cell 100. For example, as shown in FIG. 6, lower ends of the second barrier 431, the first receiving end 432, and the second receiving end 433 may be spaced apart from a shoulder portion 120 of the battery cell 100 by a height H2.

While the support 420 and the receiving portion 430 adjacent to one side plate 220 are shown in FIGS. 5 and 6, the bus bar holder 400 may also include the support 420 and the receiving portion 430 at the other side adjacent to the other side plate 220.

According to some embodiments, the support 420 and the receiving portion 430 may be continuously formed seamlessly over the entire longitudinal direction (the X-axis direction) of the side plate 220.

Through such a configuration, the battery pack 10 according to some embodiments may prevent or reduce instances of the spatter S generated in the process of welding the battery cell 100 and the bus bar 300, a foreign substance, etc., being introduced to the battery cell 100.

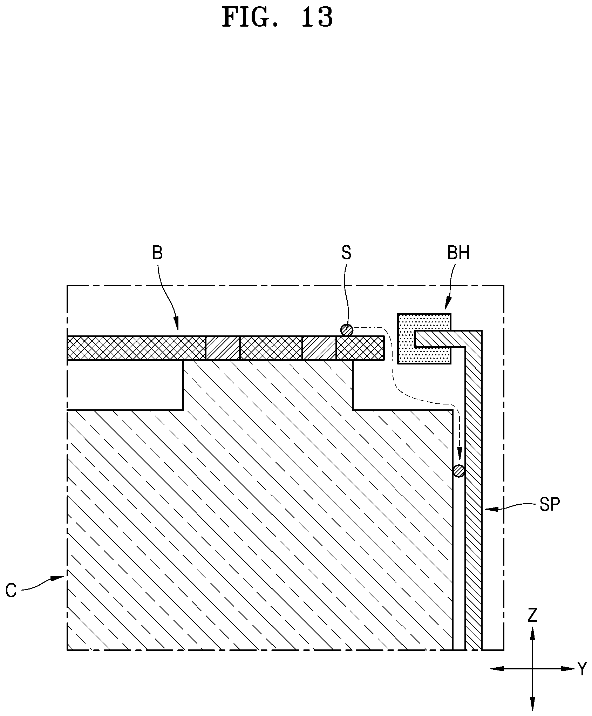

According to some embodiments, a battery pack according to a related art may include a battery cell C, a bus bar B, a side plate SP, and a bus bar holder BH, as shown in FIG. 13. The bus bar holder BH according to the related art may not have a separate receiving groove located with the bus bar B therebetween, such that the spatter S generated in a welding process may be introduced to the battery cell C through a gap between the bus bar B and the bus bar holder BH.

On the other hand, in the battery pack 10 according to some embodiments, the bus bar 300 includes the receiving portion 430 to prevent or reduce instances of the spatter S generated in the welding process being introduced to the battery cell 100. With such a configuration, the battery pack 10 according to some embodiments may not only hold the spatter S in the receiving portion 430, but also relatively easily remove the spatter S by using a blowing device or a suction device in a state of preventing or reducing instances of the spatter S being introduced into the battery cell 100.

In FIGS. 1 and 2, it is shown that the bus bar 300 includes a main body in a thin bar shape and a plurality of connecting portions 310 extending in a direction from the main body. However, the shape of the bus bar 300 is not limited thereto, and as shown in FIG. 3, a bus bar 300' may have a shape in which a main body protrudes inwardly, and may include a plurality of connecting portions 310' corresponding to an opening 410' of a bus bar holder 400'. Alternatively, a bus bar 300" may include a pair of connecting portions 310", each of which may be arranged to correspond to an opening 410" of a bus bar holder 400", as shown in FIG. 4.

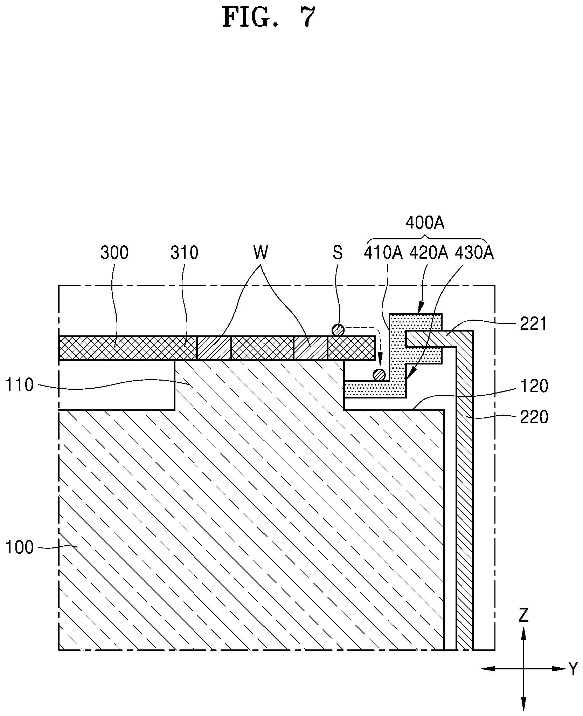

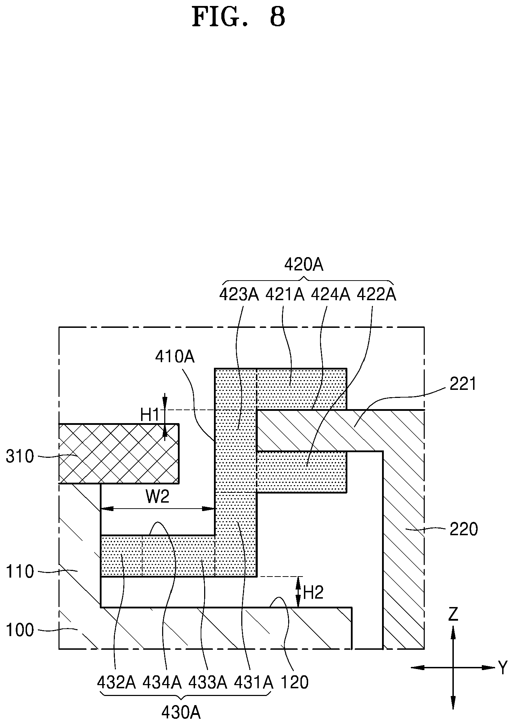

FIG. 7 shows a cross-section of the battery pack 10 according to some embodiments, and FIG. 8 is an enlarged view of FIG. 7.

In FIGS. 7 and 8, the battery pack 10 is different from the battery pack 10 of FIGS. 1 to 6 in terms of a bus bar holder 400A, and the other components thereof may be the same as those of the battery pack 10 of FIGS. 1 to 6. Hereinbelow, for convenience of a description, a description will be focused on the bus bar holder 400A.

The bus bar holder 400A may include an opening 410A, a support 420A, and a receiving portion 430A. A plurality of openings 410A may be provided in the bus bar holder 400A to correspond to the electrodes 110 of the battery cell 100. The support 420A may be coupled to the side plate 220 to support the bus bar holder 400A on the side plate 220. The support 420A may further include a first support end 421A, a second support end 422A, a first barrier 423A, and a receiving groove 424A.

The receiving portion 430A may include a receiving groove 434A extending from the support 420A to receive the spatter S or a foreign substance. The receiving portion 430A may include a second barrier 431A, a first receiving end 432A, a second receiving end 433A, and a receiving groove 434A.

According to some embodiments, the first receiving end 432A may extend perpendicularly to the second barrier 431A and in parallel to the second receiving end 433A, and an end thereof may contact the battery cell 100. For example, as shown in FIG. 8, the first receiving end 432A may extend from an end of the second receiving end 433A in a direction (the Y-axis direction), and an end thereof may contact a side surface of the electrode 110. Thus, the receiving groove 434A may be defined to have a width W2 between a side surface of the second barrier 431A and a side surface of the electrode 110. Top surfaces of the first receiving end 432A and the second receiving end 433A may form a bottom surface of the receiving groove 434A.

As the first receiving end 432A contacts the electrode 110, the receiving portion 430A may be supported on the electrode 110. As the first receiving end 432A extends in parallel to the second receiving end 433A, a greater width of the receiving groove 434A may be secured.

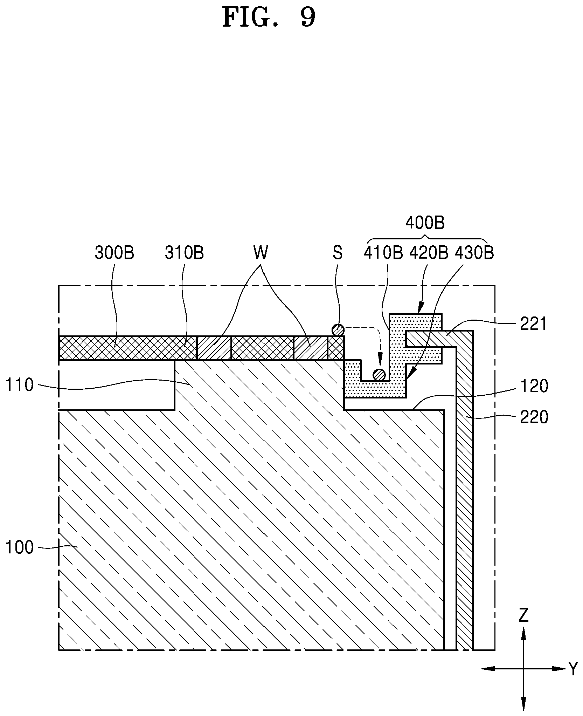

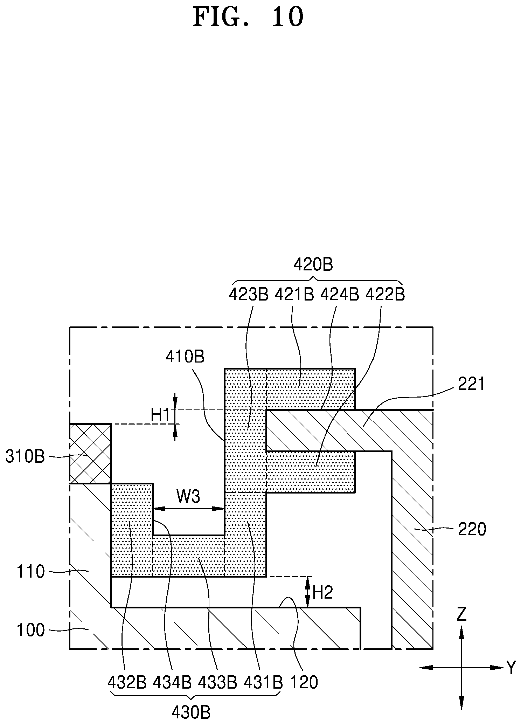

FIG. 9 shows a cross-section of the battery pack 10 according to some embodiments, and FIG. 10 is an enlarged view of FIG. 9.

In FIGS. 9 and 10, the battery pack 10 is different from the battery pack 10 according to the above-described embodiments in terms of a bus bar 300B and a bus bar holder 400B, and the other components thereof may be the same as those of the battery pack 10 according to the above-described embodiments. Hereinbelow, for convenience of a description, a description will be focused on the bus bar 300B and the bus bar holder 400B.

The bus bar 300B may be located on the top surface of the battery cell 100 and connected to the electrode 110 through a connecting portion 310B. The connecting portion 310B may be fixed to the top surface of the electrode 110 through welding.

According to some embodiments, an end of the connecting portion 310B may be located on the same line as the end portion of the electrode 110. As shown in FIG. 10, the connecting portion 310B may be located on the same vertical line as the side surface of the electrode 110 without protruding outwardly from the electrode 110 in a direction (the Y-axis direction).

In this way, as the connecting portion 310B is located inside the electrode 110 instead of protruding outwardly from the electrode 110, damage to the connecting portion 310B due to contact or collision between the connecting portion 310B and the receiving portion 430B may be prevented or reduced. A large opening 410B may be formed between the connecting portion 310B and the support 420B, such that the spatter S may relatively easily move to the receiving portion 430B.

The bus bar holder 400B may include an opening 410B, a support 420B, and a receiving portion 430B. A plurality of openings 410B may be provided in the bus bar holder 400B to correspond to the electrodes 110 of the battery cell 100. The support 420B may be coupled to the side plate 220 to support the bus bar holder 400B on the side plate 220. The support 420B may further include a first support end 421B, a second support end 422B, a first barrier 423B, and a receiving groove 424B.

According to some embodiments, the first receiving end 432B may extend in parallel to the second barrier 431B and perpendicularly to the second receiving end 433B, and a side thereof may contact the battery cell 100. For example, as shown in FIG. 10, the first receiving end 432B may extend from an end of the second receiving end 433B in a direction (the Z-axis direction), and a side surface thereof may contact the side surface of the electrode 110. That is, a surface of the first receiving end 432B may contact the electrode 110 over the entire height direction. Thus, the receiving groove 434B may be defined to have a width W3 between a side surface of the second barrier 431B and a side surface of the first receiving end 432B. A top surface of the second receiving end 433B may form a bottom surface of the receiving groove 434B.

As the first receiving end 432B contacts the electrode 110, the receiving portion 430B may be supported on the electrode 110. As the first receiving end 432B extends perpendicularly to the second receiving end 433B, a greater width of the receiving groove 434B may be secured. For a large width of the receiving groove 434B, the spatter S received in the receiving groove 434B may be relatively easily removed through the blowing device or the suction device.

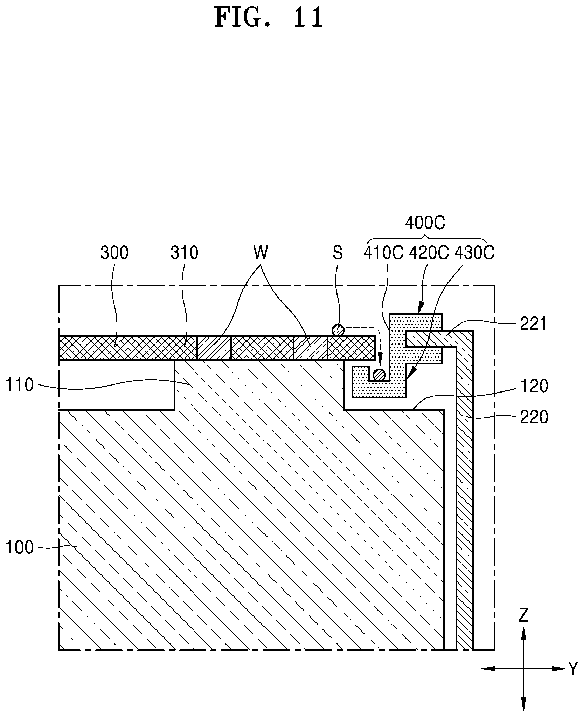

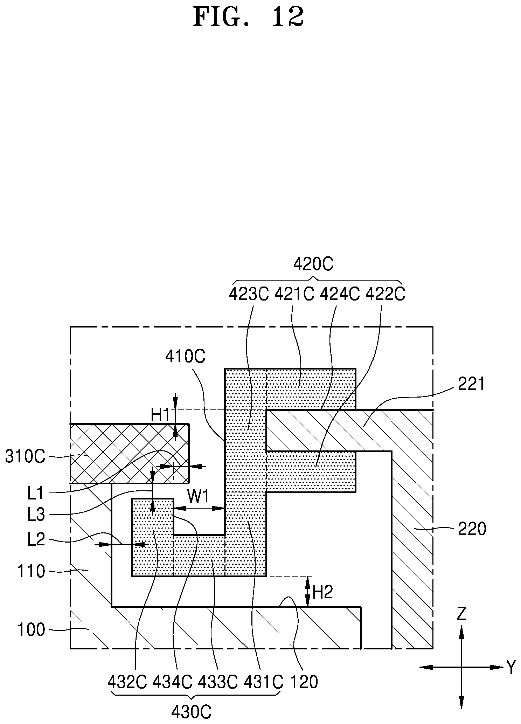

FIG. 11 shows a cross-section of the battery pack 10 according to some embodiments, and FIG. 12 is an enlarged view of FIG. 11.

In FIGS. 11 and 12, the battery pack 10 is different from the battery pack 10 of FIGS. 1 to 6 in terms of a bus bar holder 400C, and the other components thereof may be the same as those of the battery pack 10 of FIGS. 1 to 6. Hereinbelow, for convenience of a description, a description will be focused on the bus bar holder 400C.

The bus bar holder 400C may include an opening 410C, a support 420C, and a receiving portion 430C. A plurality of openings 410C may be provided in the bus bar holder 400C to correspond to the electrodes 110 of the battery cell 100. The support 420C may be coupled to the side plate 220 to support the bus bar holder 400C on the side plate 220. The support 420C may further include a first support end 421C, a second support end 422C, a first barrier 423C, and a receiving groove 424C.

The receiving portion 430C may include a receiving groove 434C extending from the support 420C to receive the spatter S or a foreign substance. The receiving portion 430C may include a second barrier 431C, a first receiving end 432C, a second receiving end 433C, and a receiving groove 434C.

According to some embodiments, the first receiving end 432C may extend in parallel to the second barrier 431C and perpendicularly to the second receiving end 433C, and may be spaced apart from the battery cell 100 not to contact the battery cell 100. For example, as shown in FIG. 12, the first receiving end 432C may extend from an end of the second receiving end 433C in a direction (the Z-axis direction), and a side surface thereof may be spaced apart from the electrode 110 by L2. An upper end of the first receiving end 432C may be spaced apart from a lower end of the connecting portion 310C by L3. Herein, L3 may be less than the width W1 of the receiving groove 434C.

As such, the disclosure has been described with reference to the embodiments shown in the drawings, but this is merely an example. It would be fully understood by those of ordinary skill in the art that various modifications and other equivalent embodiments are possible from the embodiments. Therefore, the true technical scope of the disclosure should be defined by the appended claims.

The battery pack according to some embodiments may prevent or reduce instances of a spatter generated in a process of welding a bus bar and a battery cell or other foreign substances being introduced to the battery cell through a support and a receiving portion included in a bus bar holder. In particular, the battery pack according to some embodiments may receive a spatter generated in a welding process through a receiving groove communicating with an opening between a connecting portion of a bus bar and a bus bar holder and prevents or reduces instances of the spatter moving to a battery cell, thereby relatively easily removing the spatter using a blowing device or a suction device.

It should be understood that embodiments described herein should be considered in a descriptive sense only and not for purposes of limitation. Descriptions of features or aspects within each embodiment should typically be considered as available for other similar features or aspects in other embodiments.

## Claims

1. A battery pack (10) comprising:
a plurality of battery cells (100) comprising one or more electrodes (110);
one or more bus bars (300) comprising one or more connecting portions (310) connected to the one or more electrodes (110);
a pair of side plates (220) at opposite sides of the plurality of battery cells (100);
and
a bus bar holder (400) comprising:
an opening (410) corresponding to each of the electrodes (110);
a support (420) comprising a support groove (424) into which the side plate (220) is inserted; and
a receiving portion (430) comprising a receiving groove (434) extending from the support (420) and communicating with the opening (410).

2. The battery pack (10) as claimed in claim 1, wherein the support (420) and the receiving portion (430) are between a bus bar (300) from among the bus bars (300) and a side plate (220) from among the side plates (220) and extend in a longitudinal direction of the side plate (220).

3. The battery pack (10) as claimed in claim 1 or claim 2, wherein a side plate (220) from among the side plates (220) comprises a bent portion (221) extending inwardly, and the bent portion (221) is inserted into the support groove (424).

4. The battery pack (10) as claimed in any one of claims 1 to 3, wherein the support (420) comprises:
a first support end (421) and a second support end (422) formed to oppose each other with a side plate (220) from among the side plates (220) therebetween; and
a first barrier (423) defining the support groove (424) by connecting the first support end (421) to the second support end (422) and between a bus bar (300) from among the bus bars (300) and a side plate (220) from among the side plates (220).

5. The battery pack (10) as claimed in claim 4, wherein:
(i) the first support end (421) is above the bus bar (300),
the second support end (422) is under the bus bar (300), and
the first barrier (423) extends between the first support end (421) and the second support end (422) in a height direction; and/or
(ii) the first barrier (423) is spaced apart from the bus bar (300) outwardly from the battery pack (10).

6. The battery pack (10) as claimed in any one of claims 1 to 5, wherein the receiving portion (430) comprises:
a second barrier (431) extending down from the support (420);
a first receiving end (432) spaced apart from the second barrier (431) to form the receiving groove (434) therebetween; and
a second receiving end (433) connecting the second barrier (431) to the first receiving end (432).

7. The battery pack (10) as claimed in claim 6, wherein:
(i) the second barrier (431) is between the battery cell (100) and a side plate (220) from among the side plates (220) and extends in a longitudinal direction of the side plate (220); and/or
(ii) the second barrier (431) is spaced apart from a shoulder portion (120) of the electrode (110) in a height direction.

8. The battery pack (10) as claimed in claim 6 or claim 7, wherein:
(i) a spacing distance between the second barrier (431) and the connecting portion (310) of a bus bar (300) from among the bus bars (300) is less than a spacing distance between the second barrier (431) and the first receiving end (432); and/or
(ii) the second barrier (431) is under a bus bar (300) from among the bus bars (300) at a same level as the electrode (110).

9. The battery pack (10) as claimed in any one of claims 6 to 8, wherein the receiving groove (434) has a downwardly concave shape to communicate with the opening (410).

10. The battery pack (10) as claimed in any one of claims 6 to 9, wherein:
(i) the first receiving end (432) is spaced apart from the electrode (110) and extends perpendicularly to the second receiving end (433) to contact a lower end of the connecting portion (310); or
(ii) the first receiving end (432C) is spaced apart from the electrode (110) and extends perpendicularly to the second receiving end (433C) to be spaced apart from a lower end of the connecting portion (310C), and a spacing distance between the first receiving end (432C) and the connecting portion (310C) is less than a width of the receiving groove (434C); or
(iii) the first receiving end (432A) contacts the electrode (110) and extends in parallel to the second receiving end (433A).

11. The battery pack (10) as claimed in any one of claims 6 to 9, wherein the first receiving end (432B) extends perpendicularly to an end of the second receiving end (433B) and a surface thereof contacts the electrode (110) over an entire height direction.

12. The battery pack (10) as claimed in any one of claims 1 to 10, wherein the connecting portion (310) covers a gap between the electrode (110) and the receiving portion (430).

13. The battery pack (10) as claimed in any one of claims 1 to 10 and 12, wherein the connecting portion (310) is on a top surface of the electrode (110), and an end portion thereof protrudes from a side surface of the electrode (110) to cover at least a part of the receiving groove (430).

14. The battery pack (10) as claimed in claim 1 or claim 11, wherein the connecting portion (310B) is on a top surface of the electrode (110) and an end portion thereof is on a same vertical line as a side surface of the electrode (110).

15. The battery pack (10) as claimed in any one of claims 1 to 14, wherein the support (420) and the receiving portion (430) are continuously over an entire longitudinal direction of a side plate (220) from among the side plates (220).

## Patentansprüche

1. Batteriepack (10), umfassend:
eine Vielzahl von Batteriezellen (100), die eine oder mehrere Elektroden (110) umfassen;
eine oder mehrere Sammelschienen (300), die einen oder mehrere Verbindungsabschnitte (310) umfassen, die mit der einen oder den mehreren Elektroden (110) verbunden sind;
ein Paar Seitenplatten (220) an gegenüberliegenden Seiten der Vielzahl von Batteriezellen (100); und
einen Sammelschienenhalter (400), welcher umfasst:
eine Öffnung (410), die jeder der Elektroden (110) entspricht;
eine Halterung (420), die eine Halterungsnut (424) umfasst, in die die Seitenplatte (220) eingesetzt ist; und
einen Aufnahmeabschnitt (430), der eine Aufnahmenut (434) umfasst, die sich von der Halterung (420) erstreckt und mit der Öffnung (410) kommuniziert.

2. Batteriepack (10) nach Anspruch 1, wobei sich die Halterung (420) und der Aufnahmeabschnitt (430) zwischen einer Sammelschiene (300) aus der Sammelschienen (300) und einer Seitenplatte (220) aus der Seitenplatten (220) befinden und sich in einer Längsrichtung der Seitenplatte (220) erstrecken.

3. Batteriepack (10) nach Anspruch 1 oder Anspruch 2, wobei eine Seitenplatte (220) aus der Seitenplatten (220) einen sich nach innen erstreckenden, gebogenen Abschnitt (221) umfasst und der gebogene Abschnitt (221) in die Halterungsnut (424) eingesetzt ist.

4. Batteriepack (10) nach einem der Ansprüche 1 bis 3, wobei die Halterung (420) umfasst:
ein erstes Halterungsende (421) und ein zweites Halterungsende (422), die so gebildet sind, dass sie einander gegenüberliegen, mit einer Seitenplatte (220) aus der Seitenplatten (220) zwischen ihnen; und
eine erste Barriere (423), die die Halterungsnut (424) definiert, indem sie das erste Halterungsende (421) mit dem zweiten Halterungsende (422) und zwischen einer Sammelschiene (300) aus der Sammelschienen (300) und einer Seitenplatte (220) aus der Seitenplatten (220) verbindet.

5. Batteriepack (10) nach Anspruch 4, wobei:
(i) das erste Halterungsende (421) sich oberhalb der Sammelschiene (300) befindet,
das zweite Halterungsende (422) sich unterhalb der Sammelschiene (300) befindet, und
die erste Barriere (423) sich in einer Höhenrichtung zwischen dem ersten Halterungsende (421) und dem zweiten Halterungsende (422) erstreckt; und/oder
(ii) die erste Barriere (423) von der Sammelschiene (300) nach außen von dem Batteriepack (10) beabstandet ist.

6. Batteriepack (10) nach einem der Ansprüche 1 bis 5, wobei der Aufnahmeabschnitt (430) umfasst:
eine zweite Barriere (431), die sich von der Halterung (420) nach unten erstreckt;
ein erstes Aufnahmeende (432), das von der zweiten Barriere (431) beabstandet ist, um zwischen ihnen die Aufnahmenut (434) zu bilden; und
ein zweites Aufnahmeende (433), das die zweite Barriere (431) mit dem ersten Aufnahmeende (432) verbindet.

7. Batteriepack (10) nach Anspruch 6, wobei:
(i) die zweite Barriere (431) sich zwischen der Batteriezelle (100) und einer Seitenplatte (220) aus der Seitenplatten (220) befindet und sich in einer Längsrichtung der Seitenplatte (220) erstreckt; und/oder
(ii) die zweite Barriere (431) in einer Höhenrichtung von einem Schulterabschnitt (120) der Elektrode (110) beabstandet ist.

8. Batteriepack (10) nach Anspruch 6 oder Anspruch 7, wobei:
(i) ein Zwischenabstand zwischen der zweiten Barriere (431) und dem Verbindungsabschnitt (310) einer Sammelschiene (300) aus der Sammelschienen (300) kleiner ist als ein Zwischenabstand zwischen der zweiten Barriere (431) und dem ersten Aufnahmeende (432); und/oder
(ii) die zweite Barriere (431) sich unter einer Sammelschiene (300) aus der Sammelschienen (300) auf demselben Niveau wie die Elektrode (110) befindet.

9. Batteriepack (10) nach einem der Ansprüche 6 bis 8, wobei die Aufnahmenut (434) eine nach unten konkave Form aufweist, um mit der Öffnung (410) zu kommunizieren.

10. Batteriepack (10) nach einem der Ansprüche 6 bis 9, wobei:
(i) das erste Aufnahmeende (432) von der Elektrode (110) beabstandet ist und sich senkrecht zu dem zweiten Aufnahmeende (433) so erstreckt, dass es ein unteres Ende des Verbindungsabschnitts (310) berührt; oder
(ii) das erste Aufnahmeende (432C) von der Elektrode (110) beabstandet ist und sich senkrecht zu dem zweiten Aufnahmeende (433C) so erstreckt, dass es von einem unteren Ende des Verbindungsabschnitts (310C) beabstandet ist, und ein Zwischenabstand zwischen dem ersten Aufnahmeende (432C) und dem Verbindungsabschnitt (310C) kleiner ist als eine Breite der Aufnahmenut (434C); oder
(iii) das erste Aufnahmeende (432A) die Elektrode (110) berührt und sich parallel zu dem zweiten Aufnahmeende (433A) erstreckt.

11. Batteriepack (10) nach einem der Ansprüche 6 bis 9, wobei sich das erste Aufnahmeende (432B) senkrecht zu einem Ende des zweiten Aufnahmeendes (433B) erstreckt und eine Fläche desselben die Elektrode (110) über eine gesamte Höhenrichtung hinweg berührt.

12. Batteriepack (10) nach einem der Ansprüche 1 bis 10, wobei der Verbindungsabschnitt (310) einen Spalt zwischen der Elektrode (110) und dem Aufnahmeabschnitt (430) bedeckt.

13. Batteriepack (10) nach einem der Ansprüche 1 bis 10 und 12, wobei sich der Verbindungsabschnitt (310) an einer Deckfläche der Elektrode (110) befindet und ein Endabschnitt desselben so von einer Seitenfläche der Elektrode (110) vorspringt, dass er mindestens einen Teil der Aufnahmenut (430) bedeckt.

14. Batteriepack (10) nach Anspruch 1 oder Anspruch 11, wobei sich der Verbindungsabschnitt (310B) an einer Deckfläche der Elektrode (110) befindet und ein Endabschnitt desselben auf derselben vertikalen Linie liegt wie eine Seitenfläche der Elektrode (110).

15. Batteriepack (10) nach einem der Ansprüche 1 bis 14, wobei die Halterung (420) und der Aufnahmeabschnitt (430) über eine gesamte Längsrichtung einer Seitenplatte (220) aus der Seitenplatten (220) durchgängig sind.

## Revendications

1. Bloc-batterie (10) comprenant :
une pluralité de cellules de batterie (100) comprenant une ou plusieurs électrodes (110) ;
une ou plusieurs barres omnibus (300) comprenant une ou plusieurs parties de connexion (310) reliées à ladite une ou plusieurs électrodes (110) ;
une paire de plaques latérales (220) situées sur des faces opposées de la pluralité des cellules de batterie (100) ; et
un support de barre omnibus (400) comprenant :
une ouverture (410) correspondant à chacune des électrodes (110) ;
un support (420) comprenant une rainure de support (424) dans laquelle est insérée la plaque latérale (220) ; et
une partie de réception (430) comprenant une rainure de réception (434) s'étendant depuis le support (420) et communiquant avec l'ouverture (410).

2. Bloc-batterie (10) selon la revendication 1, dans lequel le support (420) et la partie de réception (430) sont situés entre une barre omnibus (300) parmi les barres omnibus (300) et une plaque latérale (220) parmi les plaques latérales (220) et s'étendent dans une direction longitudinale de la plaque latérale (220).

3. Bloc-batterie (10) selon la revendication 1 ou la revendication 2, dans lequel une plaque latérale (220) parmi les plaques latérales (220) comprend une partie pliée (221) s'étendant vers l'intérieur, et la partie pliée (221) est insérée dans la rainure de support (424).

4. Bloc-batterie (10) selon l'une quelconque des revendications 1 à 3, dans lequel le support (420) comprend :
une première extrémité de support (421) et une seconde extrémité de support (422) formées de manière à se faire face avec une plaque latérale (220) parmi les plaques latérales (220) interposée entre elles ; et
une première barrière (423) définissant la rainure de support (424) en reliant la première extrémité de support (421) à la seconde extrémité de support (422) et entre une barre omnibus (300) parmi les barres omnibus (300) et une plaque latérale (220) parmi les plaques latérales (220).

5. Bloc-batterie (10) selon la revendication 4, dans lequel :
(i) la première extrémité de support (421) se situe au-dessus de la barre omnibus (300),
la seconde extrémité de support (422) se situe sous la barre omnibus (300), et
la première barrière (423) s'étend entre la première extrémité de support (421) et la seconde extrémité de support (422) dans une direction de hauteur ; et/ou
(ii) la première barrière (423) est espacée de la barre omnibus (300) vers l'extérieur du bloc-batterie (10).

6. Bloc-batterie (10) selon l'une quelconque des revendications 1 à 5, dans lequel la partie de réception (430) comprend :
une seconde barrière (431) s'étendant vers le bas depuis le support (420) ;
une première extrémité de réception (432) espacée de la seconde barrière (431) pour former la rainure de réception (434) entre elles ; et
une seconde extrémité de réception (433) reliant la seconde barrière (431) à la première extrémité de réception (432).

7. Bloc-batterie (10) selon la revendication 6, dans lequel :
(i) la seconde barrière (431) se situe entre la cellule de batterie (100) et une plaque latérale (220) parmi les plaques latérales (220) et s'étend dans une direction longitudinale de la plaque latérale (220) ; et/ou
(ii) la seconde barrière (431) est espacée d'une partie d'épaulement (120) de l'électrode (110) dans une direction de hauteur.

8. Bloc-batterie (10) selon la revendication 6 ou la revendication 7, dans lequel :
(i) une distance d'espacement entre la seconde barrière (431) et la partie de connexion (310) d'une barre omnibus (300) parmi les barres omnibus (300) est inférieure à une distance d'espacement entre la seconde barrière (431) et la première extrémité de réception (432) ; et/ou
(ii) la seconde barrière (431) se situe sous une barre omnibus (300) parmi les barres omnibus (300) au même niveau que l'électrode (110).

9. Bloc-batterie (10) selon l'une quelconque des revendications 6 à 8, dans lequel la rainure de réception (434) présente une forme concave vers le bas pour communiquer avec l'ouverture (410).

10. Bloc-batterie (10) selon l'une quelconque des revendications 6 à 9, dans lequel :
(i) la première extrémité de réception (432) est espacée de l'électrode (110) et s'étend perpendiculairement à la seconde extrémité de réception (433) pour entrer en contact avec une extrémité inférieure de la partie de connexion (310) ; ou
(ii) la première extrémité de réception (432C) est espacée de l'électrode (110) et s'étend perpendiculairement à la seconde extrémité de réception (433C) de manière à être espacée d'une extrémité inférieure de la partie de connexion (310C), et une distance d'espacement entre la première extrémité de réception (432C) et la partie de connexion (310C) est inférieure à une largeur de la rainure de réception (434C) ; ou
(iii) la première extrémité de réception (432A) entre en contact avec l'électrode (110) et s'étend parallèlement à la seconde extrémité de réception (433A).

11. Bloc-batterie (10) selon l'une quelconque des revendications 6 à 9, dans lequel la première extrémité de réception (432B) s'étend perpendiculairement à une extrémité de la seconde extrémité de réception (433B) et une surface de celle-ci entre en contact avec l'électrode (110) sur toute une direction de hauteur.

12. Bloc-batterie (10) selon l'une quelconque des revendications 1 à 10, dans lequel la partie de connexion (310) couvre un espace entre l'électrode (110) et la partie de réception (430).

13. Bloc-batterie (10) selon l'une quelconque des revendications 1 à 10 et 12, dans lequel la partie de connexion (310) se situe sur une surface supérieure de l'électrode (110), et une partie d'extrémité de celle-ci dépasse d'une surface latérale de l'électrode (110) pour couvrir au moins une partie de la rainure de réception (430).

14. Bloc-batterie (10) selon la revendication 1 ou la revendication 11, dans lequel la partie de connexion (310B) se situe sur une surface supérieure de l'électrode (110) et une partie d'extrémité de celle-ci se situe sur une même ligne verticale qu'une surface latérale de l'électrode (110).

15. Bloc-batterie (10) selon l'une quelconque des revendications 1 à 14, dans lequel le support (420) et la partie de réception (430) sont formés de manière continue sur toute une direction longitudinale d'une plaque latérale (220) parmi les plaques latérales (220).
